# EUROPÄISCHE PATENTANMELDUNG

(11) **EP 4 290 440 A1**
(43) Veröffentlichungstag der Anmeldung: **13.12.2023**
(21) Anmeldenummer: 23177911.7
(22) Anmeldetag: 07.06.2023
(51) Int. Cl.: G06Q 10/087, G06Q 10/30

(54) **VERFAHREN ZUM AUTOMATISIERTEN PRÜFEN VON MEHREREN BAUTEILEN**

(30) Priorität: 07.06.2022 DE 102022114230
(71) Anmelder: Eutecma GmbH, 68159 Mannheim (DE)
(72) Erfinder: Baumgärtner, Markus, 68199 Mannheim (DE); Kirstein, Markus, 67071 Ludwigshafen (DE)
(74) Vertreter: STT Sozietät Thews & Thews

(57) **Zusammenfassung**

Die Erfindung bezieht sich auf ein automatisiertes Verfahren zum Identifizieren und Qualifizieren von Bauteilen aus Kunststoff für eine Verpackung. Es sollen gebrauchte Bauteile aus Kunststoff, die zum Transport dienen, in einem Kreislaufsystem erneut in ihrer Funktion als Bauteil der Wiederverwendung zugeführt werden. Jedes Bauteil der Verpackung ist mit einem individuellen Datenträger ausgestattet und jedes Bauteil der Verpackung wird nach dem Gebrauch der Verpackung zum Transportieren einer Ware auf die Eignung zur Wiederverwendung in einem Kreislaufsystem als Bauteil für eine Verpackung zum Transportieren geprüft.

## Beschreibung

Die Erfindung bezieht sich auf ein automatisiertes Verfahren zum Identifizieren und Qualifizieren von Bauteilen aus Kunststoff. Nach der EP 1 747 869 A1 ist es bekannt, Bauteile aus Kunststoffen mit Hilfe von Datenträgern zu identifizieren, damit bei der Entsorgung und Verwertung von Fahrzeugen das Bauteil hinsichtlich seiner Materialeigenschaften qualifiziert und wieder zu Rohstoff verarbeitet werden kann. Bauteile aus Kunststoff finden auch in Verpackungen Anwendung, die in ihrer Funktion als Vorrichtung zum Transport von Haushaltsgeräten, Lebensmitteln oder medizinischen Produkten dienen. Solche Verpackungen bestehen hauptsächlich oder vollständig aus expandierbarem Polystyrol (EPS, Styropor ^{®}), mit dem die Formbauteile und Behälterbauteile der Verpackung hergestellt sind. Die EPS-Bauteile dienen je nach Anwendung als thermische Isolierung und/oder ergänzend als Transportschutz gegen Beschädigungen. Solche EPS-Bauteile werden nach einmaligem Gebrauch nicht in ihrer Funktion als Bauteil wieder verwendet, sondern als Rohstoff recycelt oder entsorgt.

Der Erfindung liegt die Aufgabe zugrunde, ein Verfahren derart auszubilden, dass gebrauchte Bauteile aus Kunststoff einer zum Transport dienenden Verpackung in einem Kreislaufsystem erneut in ihrer Funktion als Bauteil der Wiederverwendung zugeführt werden.

Gelöst wird die Aufgabe durch ein Verfahren, mit dem jedes Bauteil der Verpackung mit einem individuellen Datenträger ausgestattet wird und jedes Bauteil der Verpackung nach dem Gebrauch der Verpackung zum Transportieren einer Ware auf die Eignung zur Wiederverwendung in einem Kreislaufsystem als Bauteil für eine Verpackung zum Transportieren untersucht und geprüft wird. Unter dem Begriff "Bauteil" ist im Sinne der Erfindung ein Bauteil aus einem expandierbarem Kunststoff zu verstehen. In solche Kunststoffe lassen sich Datenträger mit programmierbaren Datenspeichern sehr einfach integrieren. Der Datenträger ist mit einem programmierbaren Datenspeicher ausgestattet. Das erfindungsgemäße Verfahren ist insbesondere auf Verpackungen gerichtet, die mehrere solcher Bauteile aufweisen. Auf dem individuellen Datenträger werden nach der Herstellung des Bauteils die Herstellungsdaten des Bauteils gespeichert. Durch die Herstellungsdaten lässt sich das jeweilige Bauteil in vielfältiger Hinsicht identifizieren, wie beispielsweise Datum und Ort der Herstellung oder der Hersteller. Auch lässt sich das Bauteil durch die Herstellungsdaten beispielsweise hinsichtlich der Stoffeigenschaften und konstruktiven Eigenschaften qualifizieren. Zudem werden alle durch die jeweilige Prüfung festgestellten gebrauchsspezifischen Eigenschaften auf dem individuellen Datenträger gespeichert. Die gebrauchsspezifischen Eigenschaften sind die Eigenschaften, in denen das Bauteil nach dem Gebrauch gegenüber den Eigenschaften nach der Herstellung abweicht. Dadurch ist es nach der Prüfung möglich, die durch die Prüfung ermittelten gebrauchsspezifischen Eigenschaften als Grundlage für eine Einstufung der Eignung des Bauteils für eine Wiederverwendung als Bauteil mit seiner ursprünglichen Funktion in einem Kreislaufsystem durchzuführen. Diese ermittelten gebrauchsspezifischen Eigenschaften können je nach Verwendung zumindest teilweise von den Eigenschaften abweichen, die mit den Herstellungsdaten des Bauteils hinterlegt wurden. Die Erfassung der durch die jeweilige Prüfung festgestellten gebrauchsspezifischen Eigenschaften auf dem individuellen Datenträger ermöglicht es auch, diese gebrauchsspezifischen Eigenschaften bei der jeweils nächsten Prüfung für eine erneute Einstufung zu berücksichtigen. Mit der Maßnahme jedes der mehreren Bauteile der Verpackung mit einem individuellen Datenträger auszustatten wird es möglich, jedes Bauteil einzeln zu prüfen und damit einzeln auszutauschen zu können. Dadurch wird es möglich, die gebrauchte Verpackung vollständig oder nur einzelne Bauteile davon in den Kreislauf der Wiederverwendung einzubringen.

Durch das erfindungsgemäße Verfahren werden alle Bauteile einer Verpackung nach dem einmaligen oder mehrmaligen Einsatz als Teil einer Verpackung geprüft oder untersucht, mit denen die Verpackung bestimmungsgemäß zusammengebaut werden kann. Die aus mehreren Bauteilen bestehende Verpackung wird dazu für die Untersuchung oder Prüfung vollständig auseinander gebaut und die einzelnen Bauteile auf Beschädigungen geprüft. Das Verfahren und die Prüfung dienen nicht dazu, Fehler an dem Bauteil zu erkennen, die bei der Herstellung des Bauteils entstanden sind, sondern sie dienen dazu, Beschädigungen an dem jeweiligen Bauteil aufgrund des vorangegangenen Einsatzes als Teil einer Verpackung für einen Transport festzustellen. Bauteile, die nicht oder nur gering beschädigt sind, können über ein Kreislaufsystem in ihrer originären Funktion als Bauteil wiederverwendet werden. Somit können auch Bauteile unterschiedlicher gebrauchter Verpackungen gemischt werden, um eine weitere Verpackung zu schaffen. Dazu werden bei der jeweiligen Untersuchung die ermittelten, für das jeweilige Bauteil gebrauchsspezifischen Eigenschaften als Parameter gespeichert. Ein Vergleich von den Sollwerten gemäß der Herstellungsdaten mit Istwerten, die aus der Prüfung resultieren, erlaubt es, den Grad der Beschädigungen zu definieren und über eine Eignung für eine Wiederverwendung zu entscheiden.

Die Einstufung der Eignung für eine Wiederverwendung in einem Kreislaufsystem kann erfindungsgemäß variieren, um den Grad der Wiederverwendung zu erhöhen. Neben den Kategorien "uneingeschränkt geeignet " oder "nicht geeignet" kann zumindest eine Kategorie "eingeschränkt geeignet" Verwendung finden. Mit der Kategorie "eingeschränkt geeignet" können Bauteile ausschließlich für bestimmte Transporteinsätze freigegeben werden. So kann beispielsweise ein Bauteil einer Kühlbox für den Transport von Waren in einem Temperaturbereich über 0° Celsius noch geeignet sein, nicht jedoch für einen Transport von Waren in einem Temperaturbereich unter 0° Celsius. Abhängig von der maximalen Temperatur die während des Transports in der Kühlbox gewährleistet sein soll, könnte aufgrund des Gebrauchs auch eine Eignung beispielsweise nur für einen Transport von maximal drei Tagen anstatt für einen Transport von bis zu zehn Tagen zugelassen sein. Mit der Kategorie "eingeschränkt geeignet" könnte auch beispielsweise maximal ein weiterer und damit letztmaliger Transporteinsatz festgelegt werden.

Durch die Wiederverwendung wird das Recyceln des Bauteils zu Werkstoff vermieden. Die Funktionsweise und die konstruktiven Eigenschaften des Bauteils bleiben erfindungsgemäß in dem Kreislaufsystem erhalten. Erfindungswesentlich ist dabei, dass ausnahmslos alle Bauteile einer Verpackung einen Datenträger aufweisen und grundsätzlich als Bauteil für eine automatisierte Untersuchung und eine Wiederverwendung geeignet sind. Durch den für jedes Bauteil individuellen Datenträger wird erreicht, dass die Bauteile völlig unabhängig voneinander untersucht und bewertet werden können und in einem weiteren Schritt völlig unabhängig voneinander in einem Kreislaufsystem als Bauteil anderer Verpackungen wiederverwendet werden können. Durch das Kreislaufsystem werden Ressourcen geschont, Müll reduziert und die Umwelt durch verminderte Emissionen geschont.

Dabei ist vorgesehen, nur die nach der Untersuchung als Ausschuss definierten Bauteile durch andere gebrauchte Bauteile oder durch neue Bauteile zu ersetzen, um eine Verpackung dann wieder komplett auf- beziehungsweise zusammenzubauen. Es kommen demnach nur die Bauteile in das Kreislaufsystem zur Wiederverwendung, die aufgrund der Untersuchung noch als geeignet oder zumindest eingeschränkt geeignet für einen weiteren Einsatz bewertet werden. Andererseits werden nur die Bauteile ausgesondert und durch neue ersetzt, die aufgrund von Beschädigungen nicht mehr einsatzfähig sind. Als Beschädigung wird auch eine zu große Verschmutzung oder Kontamination mit bedenklichen Stoffen verstanden.

Es werden also beispielsweise Bauteile einer ersten Verpackung und Bauteile einer zweiten und/oder weiteren Verpackung gemeinsam genutzt, um eine weitere Verpackung zu schaffen. Das Alter und die Anzahl der Einsätze sowie der Grad der Beschädigungen des jeweiligen Bauteils kann dabei gegenüber anderen Bauteilen einer Verpackung vielfältig variieren. Hierzu wird die Historie des Bauteils während des Lebenszyklus auf dem individuellen Datenträger erfasst und mit in die Bewertung einbezogen.

Als Verpackung sind neben Kühlboxen aus EPS zum Transportieren von medizinischen Produkten oder Lebensmitteln auch Teile von Verpackungen zu verstehen. Zum Transportieren von Haushaltsgeräten werden beispielsweise EPS-Formteile eingesetzt, die eine rahmenartige Struktur aufweisen. Solche EPS-Formteile werden als Abstandshalter um ein Produkt herum angeordnet, um das Produkt in einem Karton zu lagern und zu transportieren. Die größten solcher Verpackungsteile werden benutzt, um beispielsweise große elektrische Geräte wie Fernseher, Waschmaschinen oder Kühlschränke zu verpacken. Das Kreislaufsystem ist prinzipiell für Kühlboxen und Verpackungsteile jeglicher Größe geeignet. Die gebrauchsspezifischen Eigenschaften können rechnergestützt und/oder mit Hilfe von künstlicher Intelligenz ausgewertet und das Ergebnis der Auswertung als neue Daten auf dem Datenträger gespeichert werden. Die Prüfung erfolgt bevorzugt entlang einer Förderstrecke für jedes Bauteil einzeln. Dabei kann das Bauteil für die Prüfung mit Hilfe von automatisierten Werkzeugen oder manuell in seiner Position und Lage verändert werden.

Der Kerngedanke ist ein Verfahren zum automatisierten Prüfen von mehreren Bauteilen einer Transportvorrichtung auf körperliche Eigenschaften des jeweiligen Bauteils für eine Verwendung des Bauteils in einem Kreislaufsystem, wobei die Transportvorrichtung aus diesen mehreren Bauteilen besteht. Das einzelne Bauteil wird entlang einer Förderstrecke automatisch untersucht und durch die Untersuchung neue, für das jeweilige Bauteil aufgrund des Gebrauchs spezifische Eigenschaften werden ermittelt und als Parameter gespeichert. In jedem der mehreren Bauteile ist jeweils zumindest ein mit einem programmierbaren Datenspeicher ausgebildeter Datenträger integriert, wobei der Datenträger gebrauchsspezifische Bauteildaten speichert und die Bauteildaten des Datenträgers zumindest teilweise ausgelesen werden.

Das folgende Diagramm stellt einen beispielhaften Ablauf des Verfahrens dar. Nach der Herstellung einer Anzahl von n Bauteilen mit jeweils einem integrierten Datenträger wird eine erste Verpackung A hergestellt. Im Falle von EPS-Kühlboxen wird die Kühlbox in ihrer Funktion als Verpackung und Transportmittel aus mindestens sechs Bauteilen zusammengesetzt. Es erfolgt ein Transport von Ware mit der neuen Verpackung A beispielsweise von einem Hersteller der Ware zu einem Kunden für die Ware. Nach Abschluss des Transportes ist die Verpackung A gebraucht.

Als Vorbereitung für die Prüfung wird die Verpackung A auseinandergebaut. Danach wird jedes Bauteil 1 bis n einzeln und automatisiert auf Beschädigungen durch den Gebrauch geprüft. Mit dieser Prüfung werden gebrauchsspezifische Eigenschaften ermittelt und festgestellte Änderungen beispielsweise im Gewicht oder in den Abmessungen auf dem jeweiligen individuellen Datenträger des Bauteils gespeichert. Durch einen Vergleich mit den Herstellungsdaten kann auf Grundlage der gebrauchsspezifischen Eigenschaften eine Einstufung der Eignung jedes Bauteils 1 bis n für eine Wiederverwendung als Bauteil in einem Kreislaufsystem erfolgen. Sollte das Bauteil zu stark beschädigt sein, wird es als Ausschuss recycelt. Im Falle einer Eignung wird das Bauteil für den Aufbau einer anderen Verpackung B genutzt. Mit der Verpackung B wird wiederum Ware transportiert. Nach dem Transport mit der Verpackung B erfolgt wiederum eine Prüfung der Bauteile und eine Einstufung der Eignung für einen erneuten Einsatz. Das Verfahren wird mit dem Auseinanderbauen der Verpackung B zwecks Prüfung fortgesetzt, wie es bezüglich der Verpackung A erfolgte.

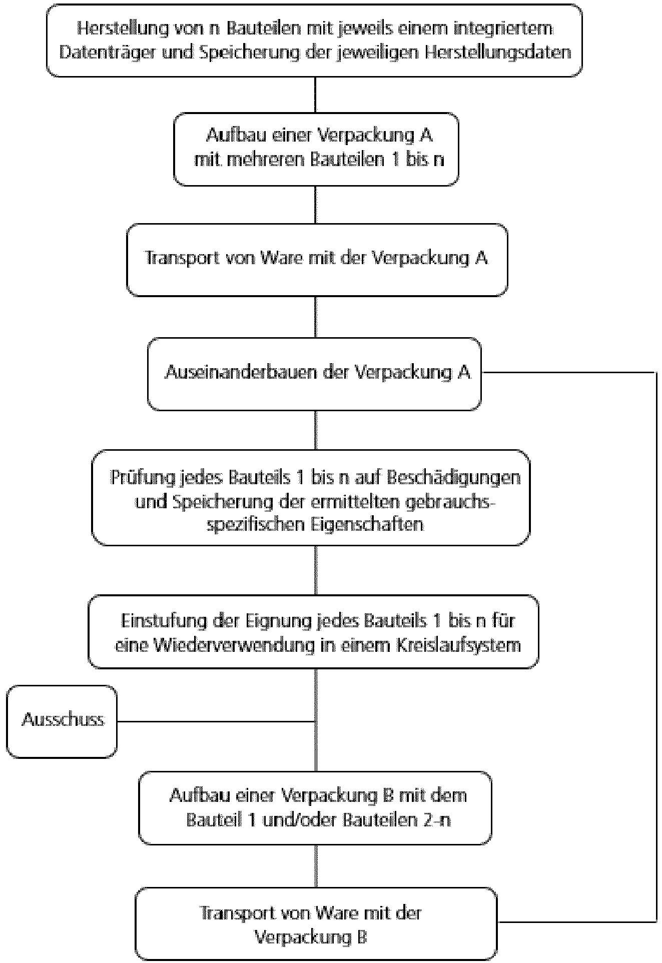

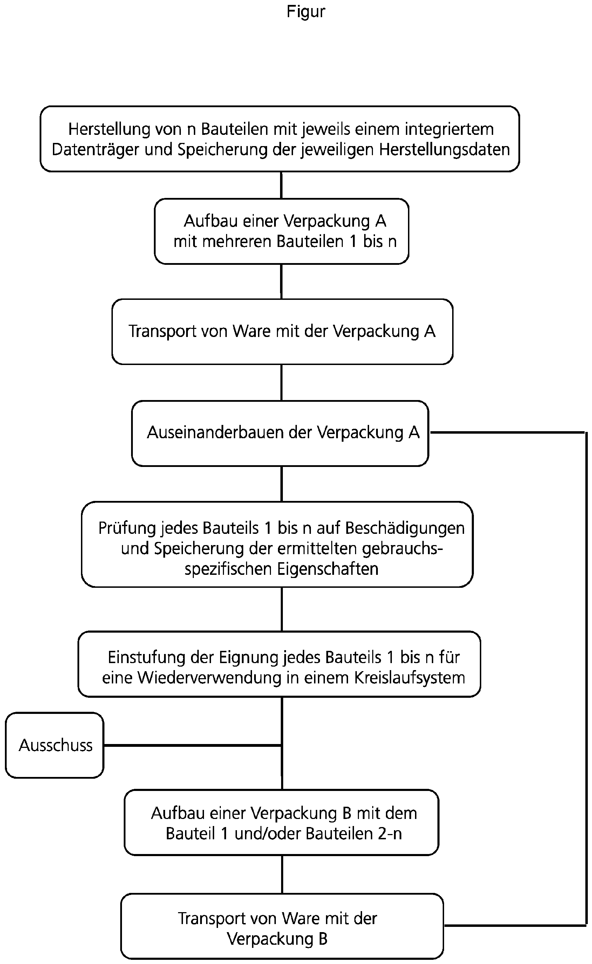

## Patentansprüche

1. Verfahren zum automatisierten Identifizieren und Qualifizieren von allen für einen Transport gebrauchten Bauteilen aus Kunststoff einer zum Transport dienenden Verpackung, die aus mehreren einzelnen Bauteilen aus Kunststoff besteht, wobei
a) in jedem Bauteil der Verpackung jeweils ein mit einem programmierbaren Datenspeicher ausgestatteter Datenträger integriert ist, auf dem die Herstellungsdaten des Bauteils gespeichert sind,
b) alle Bauteile der gebrauchten Verpackung auf die Eignung zur Wiederverwendung als Bauteil in einem Kreislaufsystem für eine Verpackung untersucht und geprüft werden und hierzu
c) jedes Bauteil einzeln automatisch auf Beschädigungen geprüft wird und
d) die durch die Prüfung ermittelten gebrauchsspezifischen Eigenschaften als Grundlage für eine Einstufung der Eignung für eine Wiederverwendung in dem Kreislaufsystem dienen.

2. Verfahren nach Anspruch 1,
**dadurch gekennzeichnet,**
**dass** die Bauteile aus Kunststoffen, wie expandierbarem Polystyrol (EPS) oder expandierbarem Polyethylen (EPE) oder expandierbarem Polypropylen (EPP) oder graphiertem EPS, gebildet sind und der Datenträger direkt in das Bauteil oder in ein Lagerteil aus diesen Kunststoffen eingeschäumt ist, wobei das Lagerteil in das Bauteil integriert ist.

3. Verfahren nach Anspruch 1 oder 2,
**dadurch gekennzeichnet,**
**dass** das Bauteil für die Prüfung gewogen wird und/oder durch optische Sensoren und/oder mit elektromagnetischen Sensoren und/oder Kameras automatisch
a) die äußeren Abmessungen des Bauteils ermittelt und/oder
b) die Oberflächenkonturen und Oberflächenbeschaffenheiten des Bauteils ermittelt und/oder
c) die Gefügestrukturen des Bauteils und/oder Fremdkörper am oder im Bauteil zwei- oder dreidimensional ermittelt werden.

4. Verfahren nach einem der vorstehenden Ansprüche,
**dadurch gekennzeichnet,**
**dass** während und/oder nach der Prüfung die ermittelten gebrauchsspezifischen Eigenschaften
a) ausgewertet werden und/oder
b) ein Vergleich mit den Herstellungsdaten des Bauteils erfolgt und/oder
c) auf dem Datenträger gespeichert werden und/oder
d) in einer Cloud gespeichert werden.

5. Verfahren nach Anspruch 4,
**dadurch gekennzeichnet,**
**dass** durch den Vergleich die Einstufung der Eignung zur Wiederverwendung erfolgt.

6. Verfahren nach einem der vorstehenden Ansprüche,
**dadurch gekennzeichnet,**
**dass** die Verpackung aus mehreren einzelnen Bauteilen form- und kraftschlüssig und ohne weitere Verbindungsmittel oder Hilfsstoffe für ihren bestimmungsgemäßen Gebrauch zusammen gesetzt werden kann.

7. Verfahren nach einem der vorstehenden Ansprüche,
**dadurch gekennzeichnet,**
**dass** das Bauteil einer ersten gebrauchten Verpackung zusammen mit Bauteilen einer zweiten gebrauchten Verpackung und/oder zusammen mit neuen Bauteilen für eine Verpackung zu einer Verpackung zusammengebaut werden kann.

8. Verfahren nach einem der vorstehenden Ansprüche,
**dadurch gekennzeichnet,**
**dass** die Verpackung als Transportbehälter oder als ein nicht elektrischer isolierender Transportbehälter mit zumindest sechs Bauteilen ausgebildet ist.

9. Verfahren nach einem der vorstehenden Ansprüche,
**dadurch gekennzeichnet,**
**dass** die Einstufung der Eignung für eine Wiederverwendung in ein Kreislaufsystem in den folgenden mindestens drei Kategorien erfolgt:
a) uneingeschränkt geeignet;
b) eingeschränkt geeignet;
c) nicht geeignet.

10. Verfahren nach einem der vorstehenden Ansprüche,
**dadurch gekennzeichnet,**
**dass** die Verpackung einen optisch lesbaren Code aufweist, der eine Adresse für eine Rückgabe der Bauteile in das Kreislaufsystem beinhaltet.
